Europäisches Patentamt

European Patent Office

Office européen des brevets

(11) Veröffentlichungsnummer: **0 254 276**
**A1**

## (12) EUROPÄISCHE PATENTANMELDUNG

(21) Anmeldenummer: 87110556.5

(22) Anmeldetag: 21.07.87

(51) Int. Cl.⁴: **G02B 6/42** , H01R 13/627

(30) Priorität: 24.07.86 DE 3625075

(43) Veröffentlichungstag der Anmeldung:
27.01.88 Patentblatt 88/04

(84) Benannte Vertragsstaaten:
AT BE CH DE ES FR GB GR IT LI LU NL SE

(71) Anmelder: **Siemens Aktiengesellschaft Berlin und München**
**Wittelsbacherplatz 2**
**D-8000 München 2(DE)**

(72) Erfinder: **Pohl, Peter, Dipl.-Ing.**
**Lohfeldstrasse 12**
**D-8033 Krailling(DE)**

(54) Zwischenstück für eine Lichtwellenleiter-Steckverbindung.

(57) Das Lichtwellenleiter-Steckverbinder-Zwischenstück aus einem Gehäuse (1) mit Durchgangsöffnung für die Steckverbinderteile (4) , hat an einem Ende ein quer zur Durchgangsöffnung gerichtetes Stegpaar, das in entsprechende Nuten (11) des einen Steckverbinderteils eingreift und einen außen am Gehäuse befestigten U-förmigen Federdrahtbügel (13) , der mit seinem Querstück (10) und mit abgewinkelten Schenkelenden Verriegelungsorgane bildet, die a) ein Herausgleiten der Stege aus den Nuten des Steckverbinderteiles verhindern und b) hinter einem Vorsprung des anderen in die Durchgangsöffnung eingeführten Steckverbinderteils einrasten und so die beiden Steckverbinderteile betriebssicher aneinanderhalten.

# FIG 1

## Zwischenstück für eine Lichtwellenleiter-Steckverbindung

Die Erfindung bezieht sich auf ein Zwischenstück für eine Lichtwellenleiter-Steckverbindung aus zwei zusammensteckbaren Teilen, mit einem Gehäuse, das eine Durchgangsöffnung zum Einführen der beiden Steckverbinderteile von zwei voneinander abgewandten Seiten des Gehäuses her aufweist.

Ein solches Zwischenstück ist z.B. aus der DE-PS 25 16 858 bekannt. Das bekannte Zwischenstück besteht im wesentlichen aus einer hohlzylindrischen Hülse, in die von beiden Seiten her stiftförmige Steckverbinderteile eingesteckt werden können. Die stiftförmigen Steckverbinderteile enthalten jeweils konzentrisch eine lichtleitende Faser, deren freies Ende mit dem Frontende eines stiftförmigen Teiles der Steckverbindung bündig ist. Bei geeigneter Abstimmung des inneren Hohlraumes des Zwischenstückes auf die stiftförmigen Teile der Steckverbindung sitzen diese spielfrei im Zwischenstück und liegen mit ihren frontseitigen Enden aneinander. Zum Festhalten der beiden Steckverbinderteile mit aneinanderliegenden frontseitigen Enden ist eine das Zwischenstück umgebende Feder vorgesehen, die mit ihren Enden in außerhalb des Zwischenstücks befindliche Eindrehungen an den beiden Steckverbinderteilen eingreift.

Insbesondere bei einer Lichtwellenleiter-Steckverbindung, bei der eine lichtleitende Faser mit einem Endabschnitt in einem stiftförmigen Teil des Steckverbinders befestigt ist, während das andere Teil der Steckverbindung buchsenförmig ausgebildet ist und mit einem optoelektrischen bzw. elektrooptischen Wandler in Verbindung steht, wird kein Zwischenstück benötigt, das die Justierung der beiden Steckverbinderteile aufeinander bewirkt, da eine solche Justierung schon durch das Einstecken des stiftförmigen Teils in das buchsenförmige Teil der Steckverbindung erfolgt. Solche Lichtwellenleiter-Steckverbindungen zwischen einem Faserende und einem optoelektrischen bzw. elektrooptischen Wandler werden jedoch häufig als Doppelstecker ausgebildet, wobei die eine Steckverbindung des Doppelsteckers eine ankommende Faser mit einem optoelektrischen Wandler und die andere Steckverbindung des Doppelsteckers eine abgehende Faser mit einem elektrooptischen Wandler verbinden. Bei einem Doppelstecker sind darüber hinaus die beiden Steckerteile je für sich in axialer Richtung federbelastet, um in Steckrichtung auftretende Toleranzen zwischen den Steckerteilen ausgleichen zu können. Dies hat aber zur Folge, daß die Steckverbinderteile im zusammengesteckten Zustand miteinander verrastet werden müssen, um zu verhindern, daß einer der beiden federbelasteten Steckerstifte den anderen soweit zurückdrängt, daß dieser aus seiner optimalen Position herausbewegt wird.

Aufgabe vorliegender Erfindung ist es daher, ein Zwischenstück der eingangs genannten Art so weiterzubilden, daß es bei möglichst einfachem Aufbau zum betriebssicheren Aneinanderhalten der beiden Teile einer Steckverbindung geeignet ist, insbesondere dazu, um ein federbelastetes, stiftförmiges und ein buchsenförmiges Steckverbinderteil im zusammengesteckten Zustand zu halten.

Erfindungsgemäß ergibt sich die Lösung dieser Aufgabe dadurch, daß ein U-förmig gebogener Federdrahtbügel mit Zwischenabschnitten seiner U-Schenkel an voneinander abgewandten Außenseiten des Gehäuses geführt ist und daß abgewinkelte Enden der U-Schenkel des Federdrahtbügels an einem Ende der Durchgangsöffnung und ein die U-Schenkel verbindendes Querstück am anderen Ende der Durchgangsöffnung als Verriegelungsorgane angeordnet sind.

Bei unkompliziertem Aufbau des Zwischenstückes erhält man auf diese Weise eine wirkungsvolle Rastierung für die Steckverbinderteile, da z.B. quer zur Durchgangsöffnung gerichtete Bereiche des Federdrahtbügels hinter entsprechend ausgebildeten Konturen der Steckverbinderteile betriebssicher einrasten.

In weiterer Ausgestaltung der Erfindung kann vorgesehen sein, daß das Gehäuse an einem Ende der Durchgangsöffnung mit zwei zueinander parallelen und aufeinander zu gerichteten Stegen versehen ist und daß beide Stege ein freies Ende und ein in eine Gehäuseseitenwand übergehendes Ende aufweisen.

Hierdurch wird das Gehäuse vorzugsweise mit dem buchsenförmigen Steckverbinderteil dadurch verbunden, daß das Zwischenstück-Gehäuse mit seinen Stegen quer zur Steckrichtung in Nuten eingeschoben wird, die am buchsenförmigen Steckverbinderteil vorgesehen sind.

Dabei ist es vorteilhaft, daß entweder das Querstück die freien Enden der Stege überbrückt oder daß die quer zur Durchgangsöffnung gerichteten Enden der Bügelschenkel auf der Seite der freien Enden der Stege vorgesehen sind.

Dadurch wird das Zwischenstück-Gehäuse nach dem Einschieben seiner Stege in entsprechende Nuten des Steckverbinderteils am Steckverbinderteil verriegelt, da entweder das Querstück des Federdrahtbügels oder dessen quer zur Durchgangsöffnung gerichtete Enden verhindern, daß das Zwischenstück wieder von dem Steckverbinderteil abgleiten kann.

Der Federdrahtbügel kann insbesondere dadurch an dem Zwischenstück-Gehäuse befestigt werden, daß jeweils ein quer zum Verlauf der Durchgangsöffnung gerichteter Zwischenabschnitt der U-Schenkel in einer nach außen offenen Nut des Gehäuses geführt ist, die auf einer Seite durch einen ansteigenden Keil des Gehäuses begrenzt ist, und daß ein zur Durchgangsöffnung paralleler Zwischenabschnitt der U-Schenkel hinter einer Steilkante des Keiles eingerastet ist und/oder daß Zwischenabschnitte der Bügelschenkel zwischen Ansätzen des Gehäuses geführt sind, die in Verlaufsrichtung der Schenkel abwechselnd auf der einen und der anderen Seite eines Bügelschenkels vorgesehen sind, und daß die Ansätze dabei die Zwischenabschnitte zumindest teilweise übergreifende Vorprünge aufweisen.

Diese Befestigungsmöglichkeiten des Federdrahtbügels an dem Zwischenstück-Gehäuse ermöglichen es unter Ausnutzung der Federwirkung der Bügelschenkel, daß der Bügel auch erst nachträglich, also nachdem die beiden Steckverbinderteile zusammengesteckt worden sind, am Zwischenstück-Gehäuse unkompliziert befestigt werden kann.

Während das Zwischenstück-Gehäuse mit dem einen Teil der Lichtwellenleiter-Steckverbindung mit Hilfe der in Nuten eingreifenden Stege verrastbar ist, kann das andere Teil der Lichtwellenleiter-Steckverbindung vorzugsweise dadurch an dem anderen Steckverbinderteil festgehalten werden, daß die freien Enden von zur Durchgangsöffnung parallelen Abschnitten der U-Schenkel V-förmig abgewinkelt sind und mit der geschlossenen Seite dieser Abwinkelung durch einen Schlitz des Gehäuses in die Durchgangsöffnung ragen, daß die V-förmigen Abwinkelungen zum Querstück hin einen quer zur Durchgangsöffnung verlaufenden Ast aufweisen und daß der andere Ast der V-förmigen Abwinkelungen zur Verlaufsrichtung der Durchgangsöffnung spitzwinklig gerichtet ist oder daß die Durchgangsöffnung auf der Seite des Bügel-Querstückes von einem Ende des Gehäuses bis in den Bereich des Querstückes seitlich offen ist, und daß das Querstück an dadurch zugänglichen Seitenwandkanten des Gehäuses abgestützt ist.

Das andere Steckverbinderteil drängt dabei, indem es auf den spitzwinklig gerichteten Ast der V-förmigen Abwinkelungen einwirkt, zunächst die beiden Bügelschenkel mit ihren V-förmigen Abwinkelungen etwas auseinander, ohne daß dadurch die V-förmigen Abwinkelungen aus den Gehäuseschlitzen herausgedrückt werden. Wenn die beiden Steckverbinderteile weit genug ineinandergeschoben werden, rastet der quer zur Durchgangsöffnung verlaufende Ast der V-förmigen Abwinkelungen hinter einer entsprechend ausgebildeten Kante des Steckverbinderteiles ein und verhindert dadurch betriebssicher, daß sich die Steckverbinderteile wieder voneinander entfernen können.

Verwendet man das Querstück als Verriegelungsorgan für das andere Steckverbinderteil, so benötigt man an dem Steckverbinderteil einen etwa keilförmig verlaufenden Vorsprung, der sich unter das Bügelquerstück schiebt und dieses Querstück federnd vom Gehäuse wegdrückt, bis das Querstück hinter dem keilförmigen Vorsprung einrasten kann.

Nachfolgend werden Ausführungsbeispiele des Zwischenstückes nach der Erfindung anhand von sechs Figuren noch näher erläutert.

Dabei zeigen, jeweils mehr oder weniger stark vergrößert,

Fig. 1 eine Seitenansicht einer Lichtwellenleiter-Steckverbindung, die eine lichtleitende Faser an ein Sende-oder Empfangsmodul anschließt und bei der die beiden Teile der Steckverbindung durch das Zwischenstück zusammengehalten werden,

Fig. 2 eine Ansicht von oben auf die Lichtwellenleiter-Steckverbindung von Fig. 1,

Fig. 3 die Führung der Bügelschenkel an den Seitenwänden des Gehäuses und

die Fig. 4, 5 und 6 in Seiten-und Vorderansicht sowie von oben gesehen, mit teilsweise geschnittenem Gehäuse, ein Ausführungsbeispiel, bei dem die Enden der Bügelschenkel mit V-förmigen Abwinkelungen durch Gehäuseschlitze in die Durchgangsöffnung des Gehäuses ragen.

Im einzelnen ist den Figuren zu entnehmen, daß das Zwischenstück ein etwa quaderförmiges Kunststoff-oder Metallgehäuse 1 aufweist, das eine Durchgangsöffnung 2 umschließt. Die Durchgangsöffnung 2 erstreckt sich zwischen voneinander abgewandten Seiten 3 des Gehäuses 1 und ist so bemessen, daß ein stiftförmiges Teil 4 einer Lichtwellenleiter-Steckverbindung durch die Durchgangsöffnung 2 hindurch in ein buchsenförmiges Teil 5 der Lichtwellenleiter-Steckverbindung eingesteckt werden kann. Insbesondere ist z. B. das stiftförmige Teil der Lichtwellenleiter-Steckverbindung auf der Seite einer lichtleitenden Faser vorgesehen, während das buchsenförmige Lichtwellenleiter-Steckverbindungsteil baulich mit einem optoelektrischen bzw. elektrooptischen Wandler zusammenhängt, der als Sende-bzw. Empfangsmodul 8 ausgebildet ist und über elektrische Anschlüsse 6 mit Rasterbohrungen einer Leiterplatte 7 verlötet ist.

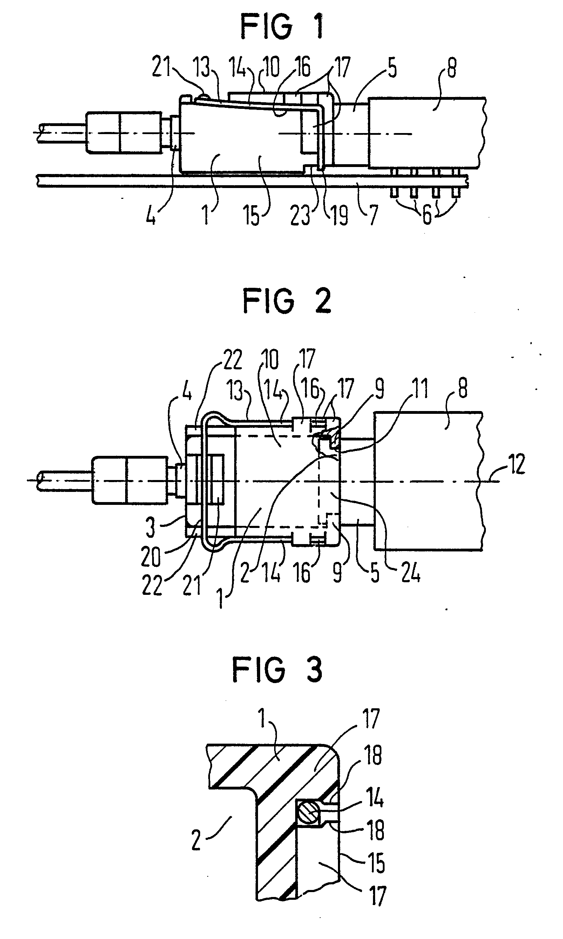

Wie insbesondere Fig. 2 zeigt, weist das Gehäuse 1 an der dem stiftförmigen Teil 5 zugewandten Seite 3 Stege 9 auf, die zueinander parallel verlaufen, aufeinander zu gerichtet sind und in die Durchgangsöffnung 2 ragen. Die Stege 9 sind an einem Ende frei zugänglich, während sie an ihrem anderen Ende in eine Querwand 10 des Gehäuses 1 übergehen. Am buchsenförmigen Teil 5 der Lichtwellenleiter-Steckverbindung sind den Stegen 9 angepaßte Nuten 11 vorgesehen, so daß die Stege 9 mit ihrem freien Ende voraus quer zur Achse 12 der Lichtwellenleiter-Steckverbindung in die Nuten 11 des Steckverbinderteils 5 eingeschoben werden können. Dadurch wird das Gehäuse 1 an dem buchsenförmigen Lichtwellenleiter-Steckverbinderteil in Richtung der Steckverbinderachse 12 verriegelt.

An der Außenseite des Gehäuses 1 ist ein U-förmiger Federdrahtbügel 13 befestigt. Der Federdrahtbügel 13 umgreift mit seinen Bügelschenkeln 14 zwei an die Querwand 10 des Gehäuses 1 anschließende Seiten 15 und verläuft dabei mit einem Zwischenabschnitt 16 zwischen Gehäuseansätzen 17 (Fig. 1-3), die in Verlaufsrichtung eines Bügelschenkels 14 abwechselnd auf der einen und auf der anderen Seite des Bügelschenkels vorgesehen sind und den Bügelschenkel mit Vorsprüngen 18 teilweise übergreifen (Fig. 3). Der Federdrahtbügel 13 wird auf diese Weise betriebssicher am Gehäuse festgehalten, da ein weiterer Zwischenabschnitt 19 der Bügelschenkel 14, welcher quer zum Verlauf der Durchgangsöffnung 2 abgewinkelt ist, in eine nach außen offene Nut des Gehäuses 1 eingepaßt ist.

Ein die Bügelschenkel 14 verbindendes Querstück 20 des Federdrahtbügels 13 überbrückt auf der Seite der Querwand 10 des Gehäuses 1 den Abstand zwischen den Gehäuseseiten 15. Dabei stützt sich der Bügel 20 federnd an Kanten 22 der Seiten 15 ab. Dies ist möglich, weil von einer Seite 3 des Gehäuses 1 ausgehend, die dem stiftseitigen Teil 4 der Lichtwellenleiter-Steckverbindung zugewandt ist, die Querwand 10 des Gehäuses 1 bis über den Bereich des Bügels 20 hinaus ausgespart ist.

Beim Einschieben des stiftförmigen Teils 4 der Lichtwellenleiter-Steckverbindung kann dadurch ein keilförmiger Vorsprung 21 des stiftförmigen Teiles 4 der Lichtwellenleiter-Steckverbindung das Bügelquerstück 20 zunächst von den Kanten 22 der Seiten 15 des Gehäuses 1 abheben, bis das Querstück hinter dem keilförmigen Vorsprung 21 einrastet und dadurch das stiftförmige Teil 4 der Lichtwellenleiter-Steckverbindung entgegengesetzt zur Einführungsrichtung dieses Teiles in das Gehäuse 1 am Gehäuse 1 festhält.

Da das buchsenförmige Teil 5 durch den Eingriff der Stege 9 in die Nuten 11 des buchsenförmigen Teils 5 am Gehäuse 1 festgehalten wird und das stiftförmige Teil 4 mit Hilfe des Bügelquerstückes 20, sind die beiden Steckverbinderteile 4, 5 im zusammengesteckten Zustand durch das Zwischenstück aneinander arretiert und können nicht mehr ohne weiteres voneinander gelöst werden.

Auf der von der Querwand 10 des Gehäuses 1 abgewandten Seite 23 sind quer zur Achse 12 abgewinkelte freie Enden 19 der Bügelschenkel 14 in der Nähe der freien Enden der Stege 9 so angeordnet, daß sie einen von den Stegen 9 erfaßten Abschnitt 24 des buchsenförmigen Steckverbinderteiles gegen ein Herausgleiten aus den Stegen 9 blockieren.

Der Bügel hält daher bei dem Ausführungsbeispiel nach den Figuren 1-3 an einem Ende des Gehäuses das stiftförmige Steckverbinderteil 1 am Gehäuse 1 fest und verhindert am anderen Ende des Gehäuses 1, daß das buchsenförmige Steckverbinderteil 5, das am Gehäuse durch die Stege 9 festgehalten wird, aus dem Eingriff der Stege 9 herausgleiten kann.

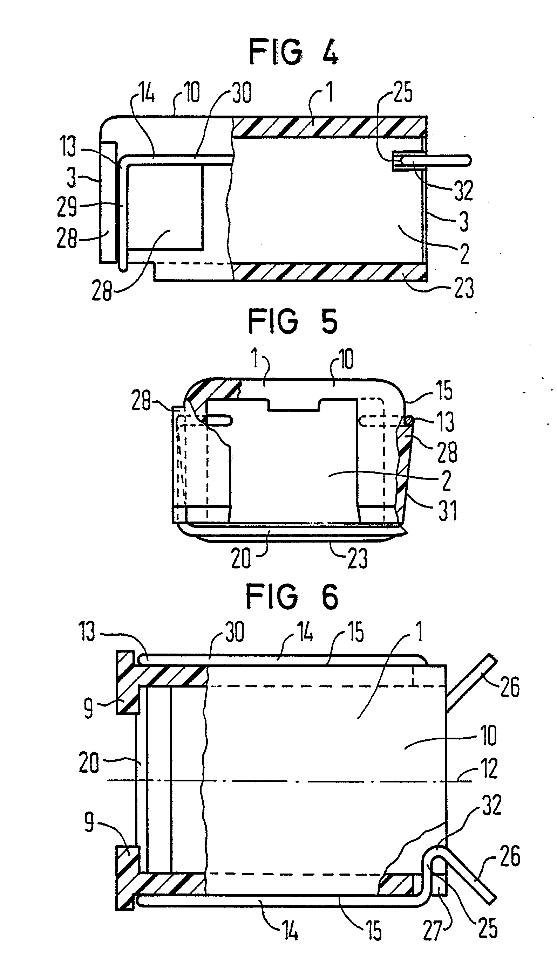

Bei dem Ausführungsbeispiel nach den Figuren 4 bis 6 ist das Querstück 20 auf der Seite der Stege 9 vorgesehen. Wie insbesondere Fig. 6 zeigt, überbrückt das Bügelquerstück 20 auf der Seite der freien Enden der Stege 9 den Abstand zwischen den Seiten 15 in unmittelbarer Nähe der Stege 9 und verhindert dadurch das Herausgleiten des buchsenförmigen Teils 5 der Lichtwellenleiter-Steckverbindung aus dem Eingriff der Stege 9. Auf der anderen Seite der Stege 9 verhindert dies die Querwand 10 des Gehäuses 1.

Bei dieser Ausführungsform des Zwischenstückes sind die freien Enden der Bügelschenkel 14 V-förmig in die Durchgangsöffnung 2 hinein abgewinkelt. Ein dem Bügelquerstück 20 zugewandter Ast 25 der Abwinkelung 32 verläuft dabei quer zur Achse 12. Der andere Ast 26 der Abwinkelung ist spitzwinklig zur Achse 12 gerichtet und bildet dadurch eine Anlaufschräge für die Stirnseite des stiftförmigen Teils 4 der Lichtwellenleiter-Steckverbindung. Der Abstand zwischen den gegen die Achse 12 gerichteten Scheitelpunkten der Abwinkelungen 32 voneinander ist nämlich geringer bemessen, als der Durchmesser eines Abschnittes des stiftförmigen Teiles 4, der in die Durchgangsöffnung 2 des Gehäuses 1 eingeschoben werden kann. Die Abwinkelungen werden dadurch zunächst federnd auseinandergedrückt, bis die Äste 25 der Abwinkelungen hinter Kanten des stiftförmigen Teils 4 einrasten können. Zur Führung der Abwinkelungen am Gehäuse 1 sind an dem Gehäuse 1 in den Seiten 15 Führungsschlitze 27 vorgesehen.

Die Figuren 4 bis 6 zeigen auch eine weitere Möglichkeit, für die Befestigung des Federdrahtbügels 13 am Gehäuse 1. Ansätze 28 des Gehäuses 1, die zwischen sich einen quer zur Achse 12 gerichteten Zwischenabschnitt 29 des Federdrahtbügels 13 aufnehmen, der unmittelbar an das Querstück 20 anschließt, sind auf der Seite eines parallel zur Achse 12 gerichteten Zwischenabschnittes 30 der Bügelschenkel 14 außen mit einem ansteigenden Keil 31 versehen, so daß der Bügel 13 von der Seite 23 des Gehäuses 1 her auf das Gehäuse 1 aufgeschoben werden kann. Dabei gleiten die Zwischenabschnitte 30 der Schenkel 14 über den Keil 31, was zu einer zunehmenden federnden Spreizung der Bügelschenkel 30 führt. Wenn das Querstück 20 auf der Seite 23 dem Gehäuse 1 anliegt, rasten die Zwischenabschnitte 30 hinter Steilkanten des Keiles 31 ein, wobei der Zwischenabschnitt 29 der Bügelschenkel 13 in eine Nut eintaucht, die durch die Ansätze 28 des Gehäuses 1 gebildet wird. Zugleich gleiten die Abwinkelungen 32 durch die Führungsschlitze 27 in die Durchgangsöffnung 2 des Gehäuses 1.

**Ansprüche**

1. Zwischenstück für eine Lichtwellenleiter-Steckverbindung aus zwei zusammensteckbaren Teilen, mit einem Gehäuse, das eine Durchgangsöffnung zum Einführen der beiden Steckerverbinderteile von zwei voneinander abgewandten Seiten des Gehäuses her aufweist,
**dadurch gekennzeichnet,**
daß ein U-förmig gebogener Federdrahtbügel (13) mit Zwischenabschnitten (16) seiner U-Schenkel (14) an voneinander abgewandten Außenseiten (15) des Gehäuses (1) geführt ist und daß abgewinkelte Enden der U-Schenkel (14) des Federdrahtbügels an einem Ende der Durchgangsöffnung (2) und ein die U-Schenkel verbindendes Querstück (20) am anderen Ende der Durchgangsöffnung (2) als Verriegelungsorgane angeordnet sind.

2. Zwischenstück nach Anspruch 1,
**dadurch gekennzeichnet,**
daß das Gehäuse (1) an einem Ende der Durchgangsöffnung (2) mit zwei zueinander parallelen und aufeinander zu gerichteten Stegen (9) versehen ist und daß beide Stege (9) ein freies Ende und ein in eine Gehäuseseitenwand (10) übergehendes Ende aufweisen.

3. Zwischenstück nach Anspruch 2,
**dadurch gekennzeichnet,**
daß das Querstück (20) die freien Enden der Stege (9) überbrückt.

4. Zwischenstück nach Anspruch 2,
**dadurch gekennzeichnet,**
daß die quer zur Durchgangsöffnung (2) gerichteten Enden (19) der Bügelschenkel (14) auf der Seite der freien Enden der Stege (9) vorgesehen sind.

5. Zwischenstück nach einem der Ansprüche 1 bis 4,
**dadurch gekennzeichnet,**
daß jeweils ein quer zum Verlauf der Durchgangsöffnung (2) gerichteter Zwischenabschnitt (29) der U-Schenkel (14) in einer nach außen offenen Nut des Gehäuses (1) geführt ist, die auf einer Seite durch einen ansteigenden Keil (31) des Gehäuses (1) begrenzt ist, und daß ein zur Durchgangsöffnung (2) paralleler Zwischenabschnitt (30) der U-Schenkel (14) hinter einer Steilkante des Keiles (31) eingerastet ist.

6. Zwischenstück nach einem der Ansprüche 1 bis 4,
**dadurch gekennzeichnet,**
daß Zwischenabschnitte (16) der Bügelschenkel (14) zwischen Ansätzen (17) des Gehäuses (1) geführt sind, die in Verlaufsrichtung der Schenkel abwechselnd auf der einen und der anderen Seite eines Bügelschenkels (14) vorgesehen sind, und daß die Ansätze (17) dabei die Zwischenabschnitte zumindest teilweise übergreifende Vorsprünge (18) aufweisen.

7. Zwischenstück nach Anspruch 3,
**dadurch gekennzeichnet,**
daß die freien Enden von zur Durchgangsöffnung (2) parallelen Abschnitten (30) der U-Schenkel (14) V-förmig abgewinkelt sind und mit der geschlossenen Seite dieser Abwinkelung (32) durch einen Schlitz (27) des Gehäuses (1) in die Durchgangsöffnung (2) ragen.

8. Zwischenschenstück nach Anspruch 7,
**dadurch gekennzeichnet,**
daß die V-förmigen Abwinkelungen (32) zum Querstück (20) hin einen quer zur Durchgangsöffnung (2) verlaufenden Ast (25) aufweisen und daß der andere Ast (26) der V-förmigen Abwinkelungen (32) zur Verlaufsrichtung der Durchgangsöffnung (2) spitzwinklig gerichtet ist.

9. Zwischenstück nach Anspruch 4,
**dadurch gekennzeichnet,**
daß die Durchgangsöffnung (2) auf der Seite des BügelQuerstückes (20) von einem Ende des Gehäuses (1) bis in den Bereich des Querstückes (20) seitlich offen ist, und daß das Querstück (20) an dadurch zugänglichen Seitenwandkanten (22) des Gehäuses abgestützt ist.

# FIG 1

# FIG 2

# FIG 3

0 254 276

FIG 4

FIG 5

FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-U-8 525 560 (KABELWERKE REINSHAGEN GmbH) * Ansprüche; Figur 1 * | 1,2 | G 02 B 6/42<br>H 01 R 13/627 |
| A | | 3,5,6 | |
| | --- | | |
| Y | PATENT ABSTRACTS OF JAPAN, Band 7, Nr. 138 (P-204)[1283], 16. Juni 1983; & JP-A-58 52 612 (MATSUSHITA DENKO K.K.) 28-03-1983 | 1,2 | |
| A | IDEM | 3,4 | |
| | --- | | |
| Y | GB-A-2 112 170 (MOLEX INC.) * Figur 1; Seite 1, Zeilen 5,6,29-52; Seite 2, Zeilen 16-18,29-31,47-49 * | 1,2 | |
| A | | 4 | |
| | --- | | |
| A | IBM TECHNICAL DISCLOSURE BULLETIN, Band 26, Nr. 7A, Dezember 1983, Seiten 3156-3157, New York, US; T.E. BOCINSKI et al.: "Pluggable connector system with housing retention and polarization" * Figuren * | 4 | |
| | ----- | | |

**RECHERCHIERTE SACHGEBIETE (Int. Cl.4)**

G 02 B 6/42
G 02 B 6/38
H 01 R 4/28
H 01 R 13/639
H 01 R 13/627
H 01 R 13/655
H 01 R 13/15
H 01 R 13/187
H 01 R 13/18
H 01 R 13/508

Der vorliegende Recherchenbericht wurde für alle Patentansprüche erstellt.

| Recherchenort | Abschlußdatum der Recherche | Prüfer |
|---|---|---|
| DEN HAAG | 21-08-1987 | WESBY P.B. |